# EUROPÄISCHE PATENTANMELDUNG

(11) **EP 4 008 519 A1**
(43) Veröffentlichungstag der Anmeldung: **08.06.2022**
(21) Anmeldenummer: 21209930.3
(22) Anmeldetag: 23.11.2021
(51) Int. Cl.: B29C 48/295, B29C 48/92, B29C 48/45, B29C 48/685, B29C 44/34, B29C 45/77, B29C 45/18

(54) **EINSCHNECKENEXTRUDER ZUR KUNSTSTOFFPLASTIFIZIERUNG**

(30) Priorität: 01.12.2020 DE 102020215146
(71) Anmelder: Helix GmbH, 71364 Winnenden (DE)
(72) Erfinder: Thieleke, Philipp, 71334 Waiblingen (DE)
(74) Vertreter: Patentanwälte Ruff, Wilhelm, Beier, Dauster & Partner mbB

(57) **Zusammenfassung**

Einschneckenextruder zur Kunststoffplastifizierung

Einschneckenextruder zur Kunststoffplastifizierung. Einschneckenextruder (1, 1') zur Kunststoffplastifizierung mit einem Zylinder (2, 2'), der eine Einzugszone (4) für eine Zufuhr von zu plastifizierendem Kunststoffmaterial und wenigstens eine in Förderrichtung hinter der Einzugszone (4) angeordnete Verarbeitungszone aufweist, sowie mit einer in dem Zylinder (2, 2') drehbar gelagerten Schnecke (3, 3') zur Förderung des Kunststoffmaterials von der Einzugszone (4) in Richtung der Verarbeitungszone, wobei die Schnecke (3, 3') entlang ihrer Drehachse (D) axial verstellbar ist, wobei der Zylinder (2, 2') im Bereich der Verarbeitungszone einen Erweiterungsabschnitt (6, 6') mit gegenüber einem übrigen Zylinderraumquerschnitt vergrößertem freien Querschnitt aufweist, und wobei die Schnecke (3, 3') im Bereich des Erweiterungsabschnitts (6, 6') einen Schneckenkernabschnitt (7, 7') mit gegenüber einem axial angrenzenden Schneckenkern (3a, 3'a) vergrößertem Kernquerschnitt aufweist, dadurch gekennzeichnet,dass der Verarbeitungszone wenigstens eine Gasinjektionsstelle (5) zugeordnet ist, dass der Erweiterungsabschnitt (6) im Bereich der Gasinjektionsstelle (5), vor der Gasinjektionsstelle (5) oder hinter der Gasinjektionsstelle (5) - in Förderrichtung gesehen - angeordnet ist, dass der Schnecke (3, 3') eine Stelleinrichtung (S) zugeordnet ist, die vorzugsweise derart gestaltet ist, dass eine Axialverstellung der Schnecke (3, 3') bei sich drehender Schnecke ermöglicht ist, und dass der Stelleinrichtung (S) eine Steuereinheit zugeordnet ist, die eine Axialverstellung der Schnecke (3, 3') vornimmt in Abhängigkeit von einer Druckerfassung einer Kunststoffschmelze innerhalb der Verarbeitungszone im Bereich der Gasinjektionsstelle (5).

## Beschreibung

Die Erfindung betrifft einen Einschneckenextruder zur Kunststoffplastifizierung nach dem Oberbegriff des Anspruchs 1.

Ein Einschneckenextruder zur Kunststoffplastifizierung ist aus der DE 10 2017 207 357 A1 bekannt. Der Einschneckenextruder dient zur Kunststoffplastifizierung und weist einen Zylinder auf, in dessen Zylinderraum eine Schnecke drehbar gelagert ist. Der Zylinderraum weist eine Einzugszone, eine Übergangszone und eine Plastifizierzone auf. Die Übergangszone ist mit wendelförmig verlaufenden Nuten versehen. Die Schnecke ist zylindrisch gestaltet und weist an ihrem Umfang einen wendelförmigen Schneckensteg auf.

Aufgabe der Erfindung ist es, einen Einschneckenextruder der eingangs genannten Art zu schaffen, der eine Druckeinstellung im Bereich der wenigstens einen Verarbeitungszone ermöglicht und insbesondere zur Herstellung geschäumter Kunststoffe geeignet ist.

Diese Aufgabe wird durch die Merkmale des Anspruchs 1 gelöst. Die erfindungsgemäße Lösung ist insbesondere zum physikalischen Schäumen von Kunststoffen vorgesehen. Dabei ist der Verarbeitungszone wenigstens eine Gasinjektionsstelle zugeordnet, und der Erweiterungsabschnitt ist im Bereich oder vor oder hinter der wenigstens einen Gasinjektionsstelle angeordnet. Dort wird ein Gas in die vollständig aufgeschmolzene Kunststoffschmelze injiziert. Erfindungsgemäß erfolgen das Aufschmelzen des Kunststoffmaterials und die Gasinjektion wie auch die weitere Verarbeitung der gasbeladenen Kunststoffschmelze innerhalb eines einzelnen Einschneckenextruders, nämlich dem erfindungsgemäßen Einschneckenextruder. Die erfindungsgemäße Lösung soll das Gas innerhalb der Kunststoffschmelze vollständig lösen. Durch dieses gelöste Gas sinkt eine Viskosität der gasbeladenen Kunststoffschmelze ab. Die Löslichkeit von Gasen in einer Kunststoffschmelze kann durch folgende Gleichung beschrieben werden: X = K_{P} x p_{G}. Dabei wird mit X die Konzentration des Gases in der Kunststoffschmelze, mit p_{G} ein Partialdruck des gelösten Gases und mit K_{P} eine Konstante, nämlich die Henry's-Law-Konstante, bezeichnet. Demzufolge ist maßgeblich für eine Löslichkeit des Gases in der Kunststoffschmelze ein Druckniveau innerhalb des Einschneckenextruders. Um einen Schaum mit niedriger Dichte herstellen zu können, wird eine hohe Löslichkeit des Gases angestrebt. Erfindungsgemäß wird nun durch die axiale Verstellbarkeit der Schnecke in Verbindung mit dem Erweiterungsabschnitt des insbesondere einteiligen Zylinders und dem vergrößerten Kernquerschnitt des Schneckenkernabschnitts eine Einstellbarkeit des Druckniveaus innerhalb des Einschneckenextruders erzielt. Dadurch ist es möglich, eine betriebspunkt- und kunststoffunabhängige, definierte Gaskonzentration innerhalb der Kunststoffschmelze zu erzeugen. Erfindungsgemäß ist der Schnecke eine Stelleinrichtung zugeordnet, die vorzugsweise derart gestaltet ist, dass eine Axialverstellung der Schnecke bei sich drehender Schnecke ermöglicht ist. Die Stelleinrichtung ist entweder derart gestaltet, dass eine Axialverstellung der Schnecke bei Stillstand der Schnecke erfolgt, oder die Stelleinrichtung ist derart ausgeführt, dass eine Axialverstellung im laufenden Betrieb des Einschneckenextruders und damit bei sich drehender Schnecke erfolgen kann. Bei Stillstand kann eine einfache Axialverstellung durch den Einsatz von Einlegeplättchen erfolgen.

Erfindungsgemäß ist der Stelleinrichtung eine Steuereinheit zugeordnet, die eine Axialverstellung der Schnecke vornimmt in Abhängigkeit von einer Druckerfassung einer Kunststoffschmelze innerhalb der Verarbeitungszone. Vorzugsweise erfolgt eine Druckerfassung im Bereich der Gasinjektionsstelle. Diese Ausgestaltung umfasst auch das Vorsehen mehrerer Drucksensoren, die über eine Länge des Zylinders des Einschneckenextruders verteilt angeordnet sind, um eine Druckmessung an mehreren Stellen des Zylinderraums zu ermöglichen.

Erfindungsgemäß weist der Erweiterungsabschnitt - in Umfangsrichtung gesehen - bereichsweise oder durchgängig einen vergrößerten freien Querschnitt auf. Ein bereichsweise vergrößerter freier Querschnitt wird insbesondere durch Wendelnuten realisiert, die in Umfangsrichtung verteilt über den Erweiterungsabschnitt vorgesehen sind. Erfindungsgemäß ist der Erweiterungsabschnitt durch mehrere, über einen Umfang der Zylinderwandung verteilt angeordnete Wendelnutabschnitte gebildet.

In Ausgestaltung der Erfindung ist der Schneckenkernabschnitt - in Umfangsrichtung gesehen - bereichsweise oder durchgängig vergrößert. Eine in Umfangsrichtung bereichsweise Vergrößerung des Schneckenkernabschnitts erfolgt durch mehrere steg- oder höckerförmige, radial nach außen erstreckte Fortsätze, die in Axialrichtung oder wendelförmig über den entsprechenden Teilabschnitt des Schneckenkerns erstreckt sind. Alternativ wird eine durchgängige Vergrößerung des Schneckenkernabschnitts durch eine ringförmige, rotationssymmetrische, gegenüber dem Schneckenkern radial nach außen erstreckte Erweiterung vorgesehen.

In weiterer Ausgestaltung der Erfindung weist der Erweiterungsabschnitt einen stetig tiefer werdenden Einlaufabschnitt und einen stetig flacher werdenden Auslaufabschnitt auf. Der Einlaufabschnitt liegt in Förderrichtung des Einschneckenextruders vor einem Mittelabschnitt des Erweiterungsabschnitts und der Auslaufabschnitt liegt in Förderrichtung hinter dem Mittelabschnitt des Erweiterungsabschnitts. Der Einlaufabschnitt, der Mittelabschnitt und der Auslaufabschnitt gehen stufenlos und damit fluchtend und bündig ineinander über.

In weiterer Ausgestaltung der Erfindung weist der Schneckenkernabschnitt einen konstant zylindrischen Mittelabschnitt sowie zwei in Förderrichtung vor und hinter dem Mittelabschnitt positionierte Übergangsabschnitte auf, wobei letzter konisch verjüngt und erster komplementär konisch erweitert gestaltet sind. Dabei erweitert sich der in Förderrichtung vor dem Mittelabschnitt positionierte Übergangsabschnitt zum Mittelabschnitt hin konisch und der in Förderrichtung hinter dem Mittelabschnitt befindliche Übergangsabschnitt verjüngt sich konisch zu dem axial anschließenden Schneckenkernbereich. Entsprechende Übergänge zwischen den Abschnitten sind stufenlos gestaltet.

In weiterer Ausgestaltung der Erfindung weisen der Schneckenkernabschnitt und der Erweiterungsabschnitt zumindest weitgehend identische Axialerstreckungen auf, die vorzugsweise in einem Bereich zwischen 15 mm und 80 mm liegen. In vorteilhafter Weise entspricht ein maximaler Axialverstellweg der Schnecke zumindest weitgehend der Axialerstreckung des Schneckenkernabschnitts oder des Erweiterungsabschnitts. Vorzugsweise entspricht ein maximaler axialer Verstellweg der Schnecke einer Axialerstreckung des Mittelabschnitts des Schneckenkernabschnitts oder des Erweiterungsabschnitts.

In weiterer Ausgestaltung der Erfindung sind der Erweiterungsabschnitt und der Schneckenkernabschnitt in einer Mischzone des Einschneckenextruders angeordnet. Zusätzlich zu einer Möglichkeit der Steuerung des Druckniveaus für die plastifizierte Kunststoffmasse ergibt sich im Bereich der Mischzone noch die Möglichkeit, Einfluss auf das Mischergebnis in der Mischzone und demzufolge Einfluss auf die Homogenität der Kunststoffschmelze zu nehmen. Dabei führt ein großer Ringspalt zwischen dem Erweiterungsabschnitt und dem Schneckenkernabschnitt zu einer geringeren Mischwirkung, zu weniger Druckverlust und zu einer geringeren Schmelzetemperatur, da weniger Dissipationsenergie in die Schmelze übergeht. Schließlich ist ein geringeres Antriebsdrehmoment für die Schnecke erforderlich. Bei einem kleinen Ringspalt zwischen dem Erweiterungsabschnitt und dem Schneckenkernabschnitt ergeben sich eine höhere Mischwirkung, ein höherer Druckverlust sowie mehr Dissipationsenergie, die in die Kunststoffschmelze übergeht, und damit zwangsläufig auch eine höhere Schmelzetemperatur. Für die Schnecke ist ein entsprechendes höheres Antriebsdrehmoment eines Antriebssystems, insbesondere eines Elektromotors, erforderlich.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Schnittdarstellung eine Ausführungsform eines erfindungsgemäßen Einschneckenextruders in einer axialen Ausgangslage einer Schnecke,
- Fig. 2: den Einschneckenextruder nach Fig. 1, jedoch in einer gegenüber Fig. 1 axial verstellten Funktionslage der Schnecke,
- Fig. 3: in vergrößerter Darstellung einen Ausschnitt des Einschneckenextruders nach Fig. 1,
- Fig. 4: in vergrößerter Darstellung einen Ausschnitt des Einschneckenextruders gemäß Fig. 2,
- Fig. 5: in vergrößerter Darstellung einen weiteren Ausschnitt des Einschneckenextruders nach Fig. 1 im Bereich einer Einzugszone,
- Fig. 6: in vergrößerter Darstellung einen weiteren Ausschnitt des Einschneckenextruders gemäß Fig. 2 im Bereich einer Einzugszone,
- Fig. 7: in weiter vergrößerter Darstellung einen Ausschnitt des Einschneckenextruders nach Fig. 1 im Bereich eines Erweiterungsabschnitts eines Zylinderraums,
- Fig. 8: schematisch einen Schnitt durch den Erweiterungsabschnitt gemäß Fig. 7 entlang der Schnittlinie VIII-VIII in Fig. 7,
- Fig. 9: den Ausschnitt gemäß Fig. 7, jedoch in der axial verstellten Funktionslage der Schnecke gemäß Fig. 2,
- Fig. 10: einen Ausschnitt einer weiteren Ausführungsform eines erfindungsgemäßen Einschneckenextruders mit einem Erweiterungsabschnitt im Bereich des Zylinderraums sowie einem erweiterten Schneckenkernabschnitt der Schnecke im Bereich einer Mischzone des Einschneckenextruders und
- Fig. 11: die Darstellung gemäß Fig. 10, jedoch in axial verstellter Funktionslage der Schnecke.

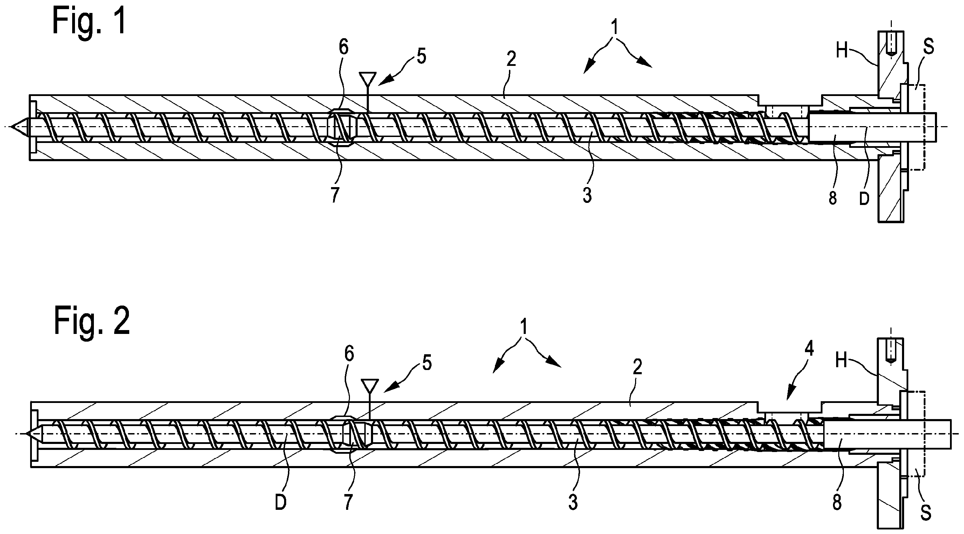

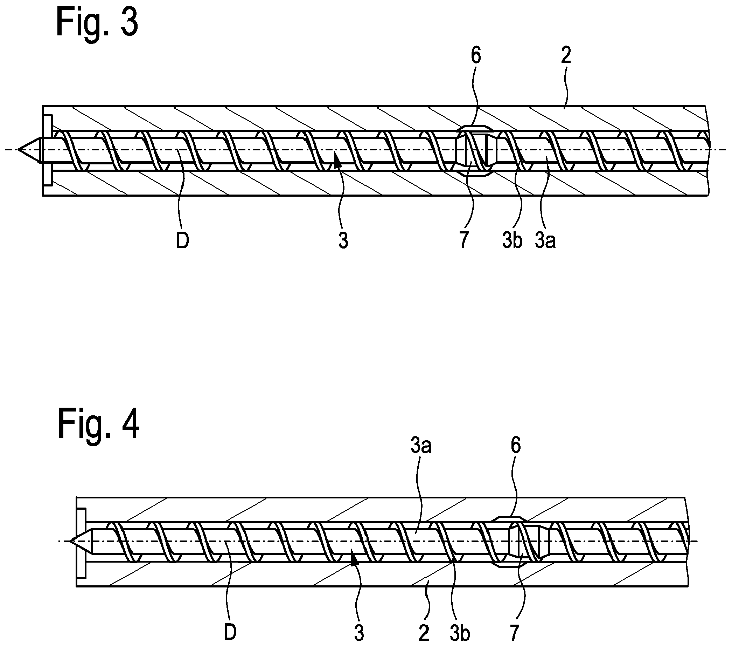

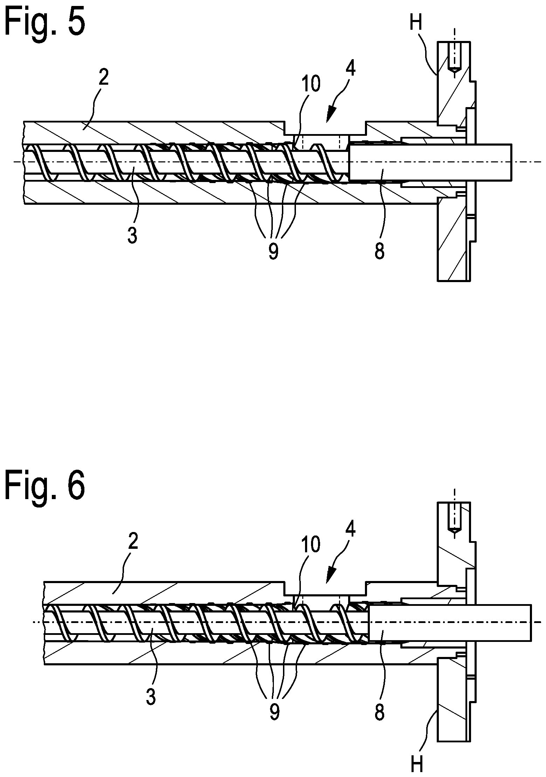

Ein Einschneckenextruder 1 gemäß den Fig. 1 bis 9 ist dazu vorgesehen, geschäumte Kunststoffe herzustellen. Dabei wird schüttfähiges Kunststoffmaterial, vorliegend Kunststoffgranulat als Schüttgut, dem Einschneckenextruder 1 im Bereich einer Einzugszone 4 zugeführt, das Kunststoffmaterial wird in dem Einschneckenextruder 1 zu einer Kunststoffschmelze plastifiziert, die im Bereich einer schematisch dargestellten Gasinjektionsstelle 5 mit einem Gas versehen wird, das im Anschluss an die Gasinjektionsstelle 5 innerhalb des Einschneckenextruders 1 in der Kunststoffschmelze gelöst wird. Die so entstehende geschäumte Kunststoffschmelze tritt endseitig aus dem Einschneckenextruder 1 aus.

Der Einschneckenextruder 1 weist einen einteiligen Zylinder 2 auf, der in einer stationären Halterung H an einem Stirnendbereich ortsfest gehalten ist. Der Zylinder 2 weist einen nicht näher bezeichneten Zylinderraum auf, der sich über eine gesamte Länge des Zylinders 2 erstreckt. In dem Zylinderraum ist eine Schnecke 3 um eine Drehachse D drehbar gelagert, die mittels eines nicht näher dargestellten Antriebssystems in Drehrichtung angetrieben ist. Die Schnecke 3 weist einen Schneckenkern 3a sowie einen auf dem Schneckenkern 3a angeordneten, wendelförmigen Schneckensteg 3b auf. Ein Außenmantel des Schneckenkerns 3a bildet in Verbindung mit dem wendelförmigen Schneckensteg 3b einen Schneckenkanal, mittels dessen das zu verarbeitende Kunststoffmaterial von der Einzugszone 4 aus in Richtung des Austritts des Zylinders 2 gefördert wird. Radial nach außen wird dieser Schneckenkanal begrenzt durch eine Zylinderwandung des Zylinderraums des Zylinders 2, die im Wesentlichen zylindrisch ausgeführt ist.

An die Einzugszone 4 des Zylinders 2 schließen mehrere Verarbeitungszonen an, wobei die Einzugszone 4 und ein Übergang zu einer ersten Verarbeitungszone im Bereich der Zylinderwandung mit Wendelnuten 9 versehen sind. Der Zylinder 2 wird in nicht näher dargestellter Weise im Bereich wenigstens einer Verarbeitungszone beheizt, um das Schmelzen des Kunststoffmaterials zu bewirken.

Die Schnecke 3 ist zusätzlich zu ihrer Drehbeweglichkeit in dem Zylinder 2 begrenzt axial verstellbar. Fig. 1 zeigt eine axiale Ausgangslage der Schnecke 3. In Fig. 2 ist die Schnecke 3 gegenüber dieser Ausgangslage entgegen der Förderrichtung zu der Halterung H hin axial versetzt. Um die Schnecke 3 axial verstellen zu können, ist dem Einschneckenextruder 1 eine lediglich schematisch dargestellte Stelleinrichtung S zugeordnet, die für eine Axialverstellung der Schnecke 3 auf diese einwirkt und die jeweils eingestellte Axialstellung axial fixiert.

Der Zylinder 2 definiert gemeinsam mit der Schnecke 3 im Bereich der Einzugszone 4 einen ringspaltförmigen Einzugsbereich 10, der unmittelbar hinter einer nicht näher bezeichneten Einzugsöffnung der Einzugszone 4 liegt. Im Bereich dieser Einzugsöffnung ist der Zylinder 2 nach oben offen, um die Zuführung von Schüttgut in Form des Kunststoffgranulats oder eines anderen schüttfähigen Kunststoffmaterials zu ermöglichen.

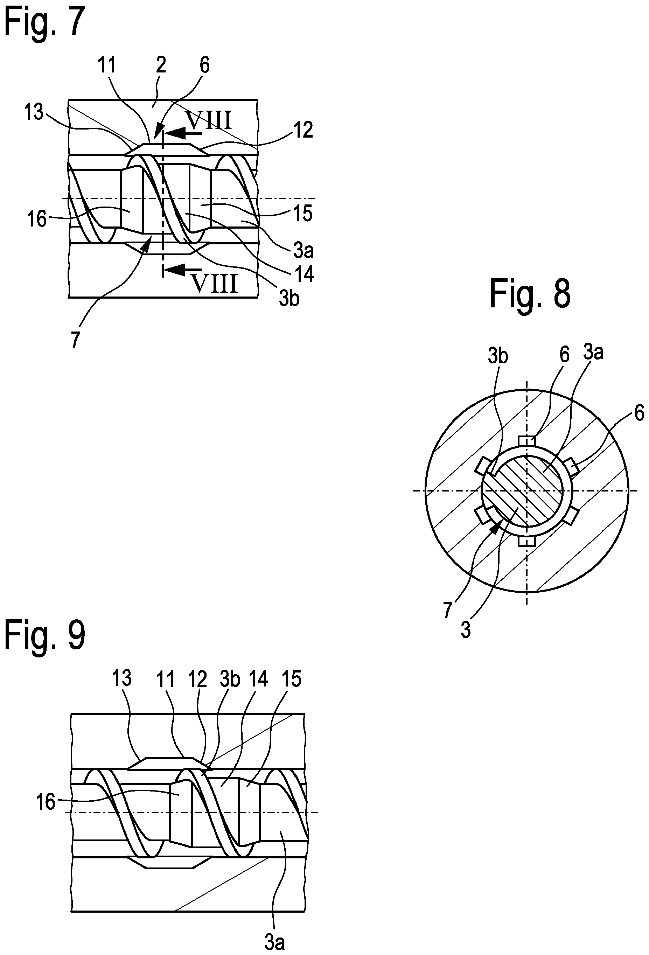

Um betriebspunkt- und kunststoffunabhängig eine definierte Gaskonzentration innerhalb der Kunststoffschmelze zu erzeugen, wird bei dem Einschneckenextruder 1 ein einstellbares Druckniveau geschaffen durch die axial verstellbare Schnecke 3 einerseits und eine Kombination aus einem Erweiterungsabschnitt 6 des Zylinderraums einerseits und einem erweiterten Schneckenkernabschnitt 7 der Schnecke 3 andererseits, vorzugsweise unmittelbar hinter der Gasinjektionsstelle 5 oder auf Höhe der Gasinjektionsstelle 5. Der Erweiterungsabschnitt 6 wird beim dargestellten Ausführungsbeispiel, wie Fig. 8 schematisch entnehmbar ist, durch sechs gleichmäßig über einen Umfang des Zylinderraums erstreckte Wendelnutabschnitte geschaffen, die einen zur übrigen Zylinderwandung parallelen Mittelabschnitt 11, einen Einlaufabschnitt 12 sowie einen Auslaufabschnitt 13 gebildet sind. Der Einlaufabschnitt 12 und der Auslaufabschnitt 13 jedes Wendelnutabschnitts des Erweiterungsabschnitts 6 bilden eine Nutschräge, wobei die Nutschräge beim Einlaufabschnitt 12 sich in Förderrichtung erweitert und beim Auslaufabschnitt 13 sich verjüngt. Alle Wendelnutabschnitte des Erweiterungsabschnitts 6 weisen die gleiche axiale Länge und auch im Übrigen identische Abmessungen auf. Die Wendelnutabschnitte sind in den Zeichnungen lediglich schematisch und vereinfacht dargestellt.

Der erweiterte Schneckenkernabschnitt 7 ist in einer Ausgangslage der Schnecke 3 auf gleicher axialer Höhe wie der Erweiterungsabschnitt 6 vorgesehen. Der erweiterte Schneckenkernabschnitt 7 weist einen zylindrischen Mittelabschnitt 14 sowie in Förderrichtung vor und hinter diesem Mittelabschnitt 14 jeweils einen Übergangsabschnitt 15 und 16 auf. Der Übergangsabschnitt 15 ist gegenüber dem Schneckenkern 3a konisch erweitert und der ausgangsseitige Übergangsabschnitt 16 gegenüber dem Mittelabschnitt bis zum Schneckenkern 3a wieder konisch verjüngt. Eine axiale Länge des erweiterten Schneckenkernabschnitts 7 entspricht zumindest weitgehend einer axialen Länge des Erweiterungsabschnitts 6, wobei - wie anhand der Fig. 7 erkennbar ist - der erweiterte Schneckenkernabschnitt 7 geringfügig axial länger ist als der Erweiterungsabschnitt 6 des Zylinderraums. Wie den Fig. 7 und 9 entnehmbar ist, ist eine radial außen liegende Kontur des wendelförmigen Schneckenstegs 3b auch im Bereich des erweiterten Schneckenkernabschnitts 7 nicht nach außen versetzt, sondern auf gleicher radialer Höhe wie die in Förderrichtung davor sowie dahinter liegenden Stegabschnitte des Schneckenstegs 3b.

Je nach axialer Stellung des erweiterten Schneckenkernabschnitts 7 relativ zu dem Erweiterungsabschnitt 6 (siehe Fig. 9 und 7) ergibt sich ein verändertes Druckniveau für die Kunststoffschmelze. In nicht näher dargestellter Weise sind dem Zylinder 2 Drucksensoren zugeordnet, die das Druckniveau im Zylinderraum messen. Abhängig von dem gemessenen Druckniveau kann durch eine axiale Verstellung der Schnecke 3 eine Änderung des Druckniveaus erzielt werden derart, dass sich eine besonders gute Löslichkeit des Gases in der Kunststoffschmelze einstellt.

Die Schnecke 3 ist beim dargestellten Ausführungsbeispiel als eingängige, reine Förderschnecke gestaltet.

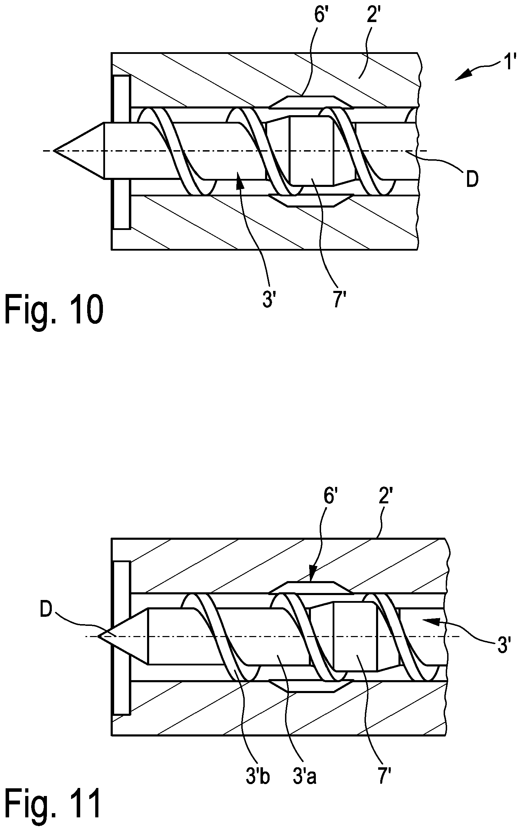

Ein Einschneckenextruder 1' gemäß den Fig. 10 und 11 entspricht von Aufbau und Funktion her dem Einschneckenextruder 1, wie anhand der Fig. 1 bis 9 zuvor beschrieben wurde. Allerdings weist der Einschneckenextruder 1' keine Gasinjektionsstelle auf. Zur Vermeidung von Wiederholungen wird auf die Offenbarung zu dem Einschneckenextruder 1 gemäß den Fig. 1 bis 9 verwiesen. Der Einschneckenextruder 1' weist alternativ oder ergänzend zu der Druckniveaueinstellung, wie sie anhand der Fig. 7 bis 9 ausführlich beschrieben wurde, eine weitere Möglichkeit der Druckniveaueinstellung im Bereich einer Mischzone an einem austrittsseitigen Endbereich des Einschneckenextruders 1' auf. Ein Erweiterungsabschnitt 6' ist in gleicher Weise in eine Zylinderwandung des Zylinderraums des Zylinders 2' eingebracht wie zuvor anhand des Einschneckenextruders 1 beschrieben und anhand der Fig. 7 bis 9 dargestellt. Auch ein erweiterter Schneckenkernabschnitt 7' der Schnecke 3' ist in identischer Weise gestaltet wie der erweiterte Schneckenkernabschnitt 7 des Einschneckenextruders 1, wie er insbesondere anhand der Fig. 7 bis 9 näher offenbart wurde. Zur Vermeidung von Wiederholungen wird daher auch bezüglich dieses Erweiterungsabschnitts 6' und des erweiterten Schneckenkernabschnitts 7' auf die Beschreibung zur vorherigen Ausführungsform gemäß den Fig. 1 bis 9 verwiesen. Gleiches gilt für den wendelförmigen Schneckensteg 3'b, der auf einem Außenmantel des Schneckenkerns 3'a über eine gesamte Länge der Schnecke 3' angebracht ist. Auch hier wird somit zur Vermeidung von Wiederholungen auf die vorherige Beschreibung des Einschneckenextruders 1 nach den Fig. 1 bis 9 verwiesen. Das Vorsehen des Erweiterungsabschnitts 6' und des erweiterten Schneckenkernabschnitts 7' in Verbindung mit der beschriebenen Axialverstellung der Schnecke 3' führt zum einen zu der Möglichkeit der Veränderung des Druckniveaus der Kunststoffschmelze. Zum anderen ist es durch die Gestaltung gemäß den Fig. 10 und 11 möglich, im Bereich der Mischzone eine Ringspaltweite zwischen der Zylinderwandung des Zylinders 2' und der Schnecke 3' einzustellen, wodurch Einfluss auf das Mischergebnis und demzufolge auf die Homogenität der Kunststoffschmelze genommen werden kann. Bei einem großen Ringspalt gemäß Fig. 10 ergeben sich eine geringere Mischwirkung und ein lediglich geringer Druckverlust, zudem weniger Dissipationsenergie, die in die Kunststoffschmelze übergeht, und schließlich eine geringere Schmelzetemperatur. Auch ein Antriebsdrehmoment des Antriebssystems für die Schnecke 3' ist gegenüber der Einstellung gemäß Fig. 11 reduziert. Bei einem kleinen Ringspalt, wie er in der Axialstellung gemäß Fig. 11 vorgesehen ist, ergibt sich eine höhere Mischwirkung, demzufolge auch ein höherer Druckverlust, wodurch ein höheres Antriebsdrehmoment des Antriebssystems für die Schnecke 3' erforderlich ist. Es ergibt sich mehr Dissipationsenergie, die in die Kunststoffschmelze übergeht und in einer höheren Schmelzetemperatur der Kunststoffschmelze resultiert.

## Patentansprüche

1. Einschneckenextruder (1, 1') zur Kunststoffplastifizierung mit einem Zylinder (2, 2'), der eine Einzugszone (4) für eine Zufuhr von zu plastifizierendem Kunststoffmaterial und wenigstens eine in Förderrichtung hinter der Einzugszone (4) angeordnete Verarbeitungszone aufweist, sowie mit einer in dem Zylinder (2, 2') drehbar gelagerten Schnecke (3, 3') zur Förderung des Kunststoffmaterials von der Einzugszone (4) in Richtung der Verarbeitungszone, wobei die Schnecke (3, 3') entlang ihrer Drehachse (D) axial verstellbar ist, wobei der Zylinder (2, 2') im Bereich der Verarbeitungszone einen Erweiterungsabschnitt (6, 6') mit gegenüber einem übrigen Zylinderraumquerschnitt vergrößertem freien Querschnitt aufweist, und wobei die Schnecke (3, 3') im Bereich des Erweiterungsabschnitts (6, 6') einen Schneckenkernabschnitt (7, 7') mit gegenüber einem axial angrenzenden Schneckenkern (3a, 3'a) vergrößertem Kernquerschnitt aufweist, **dadurch gekennzeichnet, dass** der Verarbeitungszone wenigstens eine Gasinjektionsstelle (5) zugeordnet ist, dass der Erweiterungsabschnitt (6) im Bereich der Gasinjektionsstelle (5), vor der Gasinjektionsstelle (5) oder hinter der Gasinjektionsstelle (5) - in Förderrichtung gesehen - angeordnet ist, dass der Schnecke (3, 3') eine Stelleinrichtung (S) zugeordnet ist, die vorzugsweise derart gestaltet ist, dass eine Axialverstellung der Schnecke (3, 3') bei sich drehender Schnecke ermöglicht ist, und dass der Stelleinrichtung (S) eine Steuereinheit zugeordnet ist, die eine Axialverstellung der Schnecke (3, 3') vornimmt in Abhängigkeit von einer Druckerfassung einer Kunststoffschmelze innerhalb der Verarbeitungszone im Bereich der Gasinjektionsstelle (5).

2. Einschneckenextruder (1, 1') nach dem Oberbegriff des Anspruchs 1 oder nach Anspruch 1, **dadurch gekennzeichnet, dass** der Erweiterungsabschnitt (6, 6') - in Umfangsrichtung gesehen - bereichsweise oder durchgängig einen vergrößerten freien Querschnitt aufweist, und dass der Erweiterungsabschnitt (6, 6') durch mehrere, über einen Umfang der Zylinderwandung verteilt angeordnete Wendelnutabschnitte gebildet ist.

3. Einschneckenextruder nach Anspruch 1 oder 2, **dadurch gekennzeichnet, dass** der Schneckenkernabschnitt (7, 7') - in Umfangsrichtung gesehen - bereichsweise oder durchgängig vergrößert ist.

4. Einschneckenextruder (1, 1') nach einem der vorhergehenden Ansprüche, **dadurch gekennzeichnet, dass** der Erweiterungsabschnitt (6, 6') einen stetig tiefer werdenden Einlaufabschnitt (12) und einen stetig flacher werdenden Auslaufabschnitt (13) aufweist.

5. Einschneckenextruder (1, 1') nach einem der vorhergehenden Ansprüche, **dadurch gekennzeichnet, dass** der Schneckenkernabschnitt (7, 7') einen konstant zylindrischen Mittelabschnitt (14) sowie zwei in Förderrichtung vor und hinter dem Mittelabschnitt (14) positionierte Übergangsabschnitte (15, 16) aufweist, wobei letzter konisch verjüngt und erster komplementär konisch erweitert gestaltet sind.

6. Einschneckenextruder (1, 1') nach einem der vorhergehenden Ansprüche, **dadurch gekennzeichnet, dass** der Schneckenkernabschnitt (7, 7') und der Erweiterungsabschnitt (6, 6') zumindest weitgehend identische Axialerstreckungen aufweisen, die vorzugsweise in einem Bereich zwischen 15 mm und 80 mm liegen.

7. Einschneckenextruder (1') nach einem der vorhergehenden Ansprüche, **dadurch gekennzeichnet, dass** der Erweiterungsabschnitt (6') und der Schneckenkernabschnitt (7') in einer Mischzone des Einschneckenextruders (1') angeordnet sind.
